# EUROPÄISCHE PATENTSCHRIFT

(11) **EP 1 858 781 B1**
(45) Veröffentlichungstag und Bekanntmachung des Hinweises auf die Patenterteilung: **10.11.2010**
(21) Anmeldenummer: 06723250.4
(22) Anmeldetag: 07.03.2006
(51) Int. Cl.: B65G 13/04, B65G 39/12

(54) **ROLLENBAHNFÖRDERER**
ROLLER CONVEYOR
CONVOYEUR A ROULEAUX

(30) Priorität: 16.03.2005 DE 102005012508
(43) Veröffentlichungstag der Anmeldung: 28.11.2007
(73) Patentinhaber: EISENMANN Maschinenbau GmbH & Co. KG, 71032 Böblingen (DE)
(72) Erfinder: SWOBODA, Werner, 71032 Böblingen (DE)
(74) Vertreter: Ostertag, Ulrich
(86) Internationale Anmeldenummer: PCT/EP2006/002050
(87) Internationale Veröffentlichungsnummer: WO 2006/097219

(56) Entgegenhaltungen:
- DE-A1- 3 215 921
- US-A1- 2004 016 626
- US-B1- 6 460 690

## Beschreibung

Die Erfindung betrifft einen Rollenbahnförderer zum Transportieren von lasttragenden Skids in der Automobilindustrie gemäß dem Oberbegriff des Anspruchs 1, wie er aus der US-B-6460690 bekannt ist. Rollenbahnförderer sind spezielle Förderer, die insbesondere in der Automobilindustrie zum Transport von Fahrzeugkarosserien oder Teilen von Fahrzeugkarosserien zwischen einzelnen Bearbeitungsstationen eingesetzt werden. Die Fahrzeugkarosserien sind dabei auf sog. "Skids" befestigt. Dabei handelt es sich um Transportgestelle, die zwei parallele Skidkufen aufweisen. Eine dieser Skidkufen liegt auf den Mantelflächen der Rollen der einen Rollenbahn und die andere Skidkufe auf den Mantelflächen der Rollen der anderen Rollenbahn auf. Werden die Rollen in Drehung versetzt, wandert der Skid mit der daran befestigten Fahrzeugkarosserie in Richtung der Rollenbahnen.

Bei bekannten Rollenbahnförderern der eingangs genannten Art sieht die Antriebseinrichtung so aus, daß etwa mittig von einzelnen Segmenten, aus denen der gesamte Förderer zusammengesetzt ist, jeweils ein einzelner Antriebsmotor angebracht ist. Dieser Antriebsmotor ist über Riemen mit den benachbarten Rollen verbunden. Von dort aus wird das Antriebsdrehmoment erneut über Riemen zu den nächsten Rollen, von diesen über weitere Riemen zu den übernächsten Rollen und so weiter übertragen.

Diese Bauweise bringt eine Reihe von Nachteilen mit sich: Aus Kostengründen muß bei der Herstellung der bekannten Rollenbahnförderer auf die im Handel erhältlichen Zahnriemen zurückgegriffen werden. Diese sind im allgemeinen nur in "runden" Längen verfügbar, haben also beispielsweise eine Länge von jeweils n mal 100 mm, wobei n eine ganze Zahl ist. Wegen der Umschlingung der Rollen ergibt sich bei Verwendung dieser Zahnriemen ein Rollenabstand, der je nach Rollendurchmesser eine "krumme" Zahl ist. Dies hat zur Folge, daß auch der gesamte Rollenbahnförderer eine Länge hat, die einer "krummen" Zahl entspricht.

Daher müssen häufig an den Enden der bekannten Rollenbahnförderer "Übergangslösungen" geschaffen werden, die dann insgesamt wieder zu einem mit der sonstigen Anlage kompatiblen "runden" Maß des gesamten Rollenbahnförderers führen, also z. B. zu einer Länge von n mal 1000 mm (n ist wiederum eine ganze Zahl).

Die Blechtafeln, die zur Herstellung der Seitenwangen, in denen die einzelnen Rollen gelagert sind, benutzt werden, werden im allgemeinen in "runden" Maßen geliefert; es verbleibt daher bei den bekannten Rollenbahmförderern ein Verschnitt, welcher der Differenz zwischen dem gelieferten "runden" Maß und der tatsächlichen Länge des entsprechenden Segments des Rollenbahnförderers entspricht.

Die als Antrieb verwendeten Zahnriemen bedürfen aus Unfallschutzgründen einer Abdeckung. Darüber hinaus müssen die Löcher in den Seitenwangen, in denen die Rollen gelagert sind, mit hoher Präzision positioniert werden, da anderenfalls nicht die richtige Riemenspannung erreicht werden kann. Schließlich erzeugen die Zahnriemen immer einen gewissen Abrieb, der zu einer Verschmutzung des Rollenbahnförderers und dessen Umgebung führt. Diese Verschmutzung ist bei der Herstellung von Fahrzeugkarosserien, insbesondere deren Lackierung, äußerst unerwünscht.

Aufgabe der vorliegenden Erfindung ist es, einen Rollenbahnförderer der eingangs genannten Art zu schaffen, der im wesentlichen die geschilderten Nachteile bekannter Rollenbahnförderer vermeidet.

Diese Aufgabe wird erfindungsgemäß dadurch gelöst, daß
d) die Antriebseinrichtung eine Vielzahl von einzelnen Antriebsmotoren umfaßt, von denen mindestens einer jeweils einem Paar angetriebener Rollenpaare zugeordnet ist, derart, daß die Zahl der einzelnen Antriebsmotoren mindestens gleich der Zahl von angetriebenen Rollenpaaren ist, wobei
e) die Antriebsmotoren in die Rollen integrierte Nabenmotoren sind.

Der erfindungsgemäße Grundgedanke ist der, Zahnriemen zum Antrieb der einzelnen Rollen möglichst zu vermeiden. Diese Zahnriemen sind es, die zu den ungünstigen Abständen zwischen den einzelnen Rollen und damit zu den "krummen" Maßen der verschiedenen Bauteile bei bekannten Rollenbahnförderern führten. Fallen diese Zahnriemen weg, müssen keine besonderen Abdeckungen aus Unfallschutzgründen vorgesehen werden. Ein Abrieb entsteht von vorneherein nicht mehr und die Positionierung der Löcher in den Seitenwangen der Rollenleisten, in denen die Rollen gelagert sind, bedürfen keiner exakten Positionierung mehr. Ein gewisser seitlicher Versatz kann durchaus toleriert werden, da ja bei dem erfindungsgemäßen Konzept keine Probleme mit einer Riemenspannung mehr auftreten. Die zur Herstellung des erfindungsgemäßen Rollenbahnförderers verwendeten Blechtafeln können sehr viel besser ausgenutzt werden, so daß also weniger Verschnitt verbleibt.

Beim Benutzer des Rollenbahnförderers ensteht ein geringerer Aufwand für die Instandhaltung und die Ersatzteilhaltung. Darüber hinaus baut der erfindungsgemäße Rollenbahnförderer niedriger als die bekannten. Da der erfindungsgemäße Rollenbahnförderer in "runden" Längen, z. B. in laufenden Metern, hergestellt werden kann, werden die Abwicklung der Konstruktion und die Logistik auf der Baustelle vereinfacht.

Bei einer bevorzugten Ausführungsform der Erfindung ist jeder Rolle eines angetriebenen Rollenpaares ein eigener Antriebsmotor zugeordnet. Daraus ergibt sich eine gewisse Redundanz des Systems, da der Rollenbahnförderer bereits dann funktionsfähig ist, wenn nur eine Rolle jeden Rollenpaares angetrieben ist, während die andere Rolle frei mitläuft. Werden jedoch beide Rollen des Rollenpaares selbständig in Drehung versetzt, bleibt der gesamte Rollenbahnförderer auch dann noch funktionsfähig, wenn ein einzelner Antriebsmotor ausgefallen sein sollte.

Etwas preisgünstiger ist diejenige Ausführungsform der Erfindung, bei welcher jedem angetriebenen Rollenpaar genau ein eigener Antriebsmotor zugeordnet ist. Auch hier bedeutet der Ausfall eines Antriebsmotors nicht zwingend den sofortigen Stillstand des gesamten Rollenbahnförderers, da die angetriebenen Rollen in benachbarten Rollenpaaren zum Weitertransport des Skids durchaus ausreichen können. Der ausgefallene Antriebsmotor kann dann beim nächsten planmäßigen Stillstand des Rollenbahnförderers ausgetauscht werden.

Die zu einem angetriebenen Rollenpaar gehörenden Rollen können durch eine Welle drehfest miteinander verbunden sein. Sind beide Rollen angetrieben, so werden die Torsionskräfte in der verbindenden Welle im Normalbetrieb reduziert. Fällt einer der Antriebsmotoren in dem Rollenpaar aus, bleiben beide Rollen angetrieben, wobei dann allerdings die verbindende Welle stärker tordiert wird.

Bei der Erfindung sind die Antriebsmotoren in die Rollen integrierte Nabenmotoren. Derartige mit den Rollen zu einer Baueinheit zusammengefaßte Antriebsmotoren sind preiswert im Handel erhältlich und schnell und einfach zu montieren bzw. zu demontieren. Darüber hinaus sind sie besonders platzsparend.

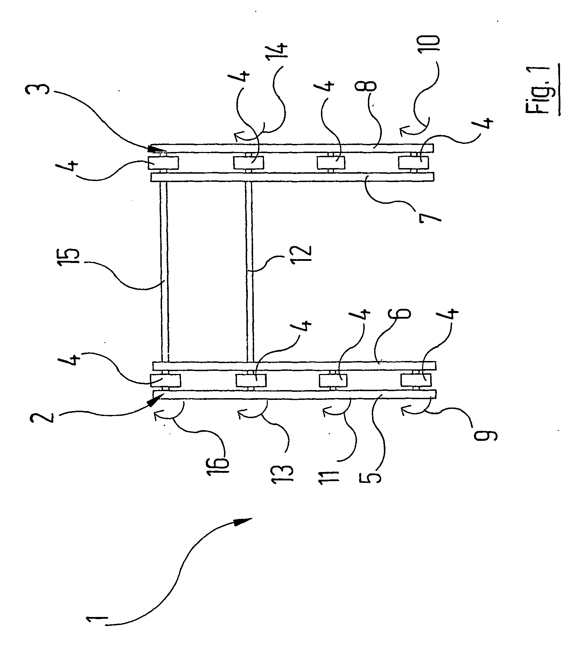

Ausführungsbeispiele der Erfindung werden nachfolgend anhand der Zeichnung näher erläutert. Es zeigen
- Figur 1: schematisch eine Draufsicht auf einen Rollen- bahnförderer, bei welcher verschiedene Möglich- keiten des Antriebs der einzelnen Rollen illu- striert sind;
- Figur 2: einen Schnitt durch ein erstes Ausführungsbei- spiel eines Rollenbahnförderers senkrecht zur Bewegungsrichtung;
- Figur 3: einen Schnitt, ähnlich der Figur 2, durch ein zweites Ausführungsbeispiel eines Rollenbahn- förderers.
Zunächst wird auf Figur 1 Bezug genommen, welcher der allgemeine Aufbau eines insgesamt mit dem Bezugszeichen 1 gekennzeichneten Rollenbahnförderers zu entnehmen ist. Dieser umfaßt zwei parallel geführte Rollenleisten 2, 3, die ihrerseits mit einer Vielzahl von in gleichen Abständen angeordneten Rollen 4 versehen sind. Die Rollen 4 liegen sich paarweise in den beiden Rollenleisten 2, 3 gegenüber, derart, daß ihre Achsen koaxial sind und senkrecht zur Erstreckungsrichtung der Rollenleisten 2, 3 und damit senkrecht zur Förderrichtung verlaufen.

Die Rollen 4 jeder einzelnen Rollenleiste 2, 3 sind dabei in jeweils zwei im wesentlichen identisch aufgebauten, spiegelsymmetrisch angeordneten Seitenwangen 5, 6 bzw. 7, 8 drehbar gelagert. Mindestens eine Rolle 4 eines sich auf den beiden Rollenleisten 2, 3 gegenüberliegenden Rollenpaares ist durch einen im Inneren der Rolle 4 angeordneten, elektrischen Nabenmotor angetrieben.

In Figur 1 sind vier Möglichkeiten dargestellt, wie dieser Antrieb erfolgen kann. Normalerweise findet sich in einem einzelnen Rollenbahnförderer 1 nur eine dieser möglichen Antriebsarten.

Die Rollen 4 des in Figur 1 zu unterst abgebildeten Rollenpaares besitzen beide einen Nabenmotor, wie durch die gekrümmten Pfeile 9, 10 angedeutet ist. Bei dem in Figur 1 darüber abgebildeten Rollenpaar ist nur die der Rollenleiste 2 zugeordnete, linke Rolle 4 mit einem Nabenmotor versehen, der durch den Pfeil 11 symbolisiert ist. Die gegenüberliegende Rolle 4 der Rollenleiste 3 dagegen dreht sich frei. Betrachtet man das erneut darüber liegende Rollenpaar, so erkennt man in Figur 1 zunächst, daß diese Rollen 4 durch eine sich quer zur Bewegungsrichtung erstreckende Welle 12 drehschlüssig miteinander verbunden sind. Beide zu dem entsprechenden Rollenpaar gehörige Rollen 4 sind mit einem Nabenmotor versehen, wie dies durch die gekrümmten Pfeile 13, und 14 symbolisiert ist. Durch das doppelte Vorhandensein der Nabenmotoren 13, 14 werden die in der Welle 12 wirkenden Torsionskräfte reduziert. Außerdem besitzt diese Anordnung eine größere Ausfallsicherheit, da die Fortsetzung des Betriebs auch dann möglich ist, wenn einer der beiden Nabenmotoren 13, 14 ausfallen sollte.

Die beiden Rollen 4 des in Figur 1 zu oberst dargestellten Rollenpaares sind ebenfalls durch eine quer zur Transportrichtung verlaufende Welle 15 miteinander verbunden. Es ist jedoch nur die linke, zur Rollenleiste 2 gehörende Rolle 4 mit einem Nabenmotor versehen, der durch den gekrümmten Pfeil 16 angedeutet ist. Die zur rechten Rollenleiste 3 gehörende Rolle 4 wird indirekt über die Welle 15 angetrieben.

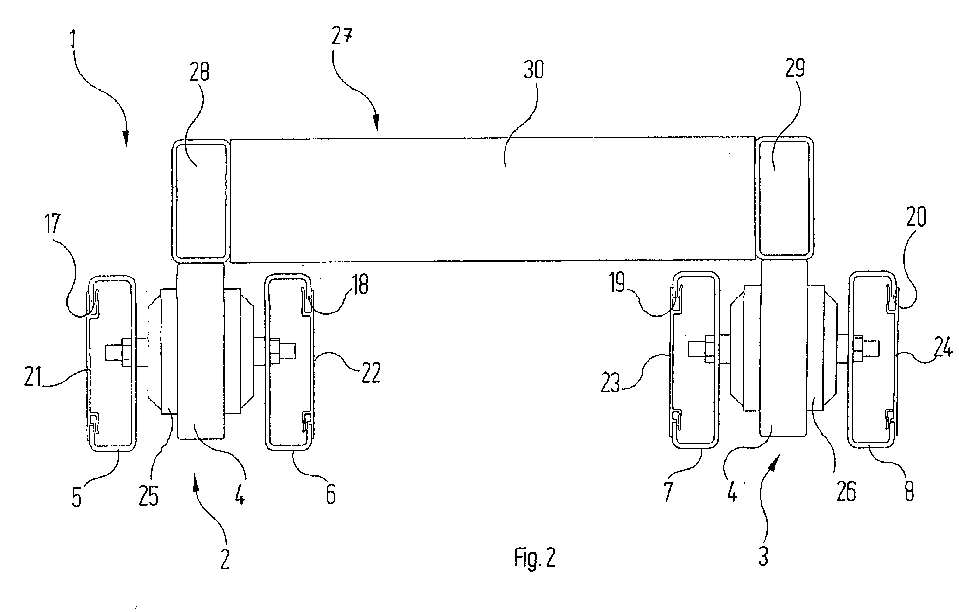

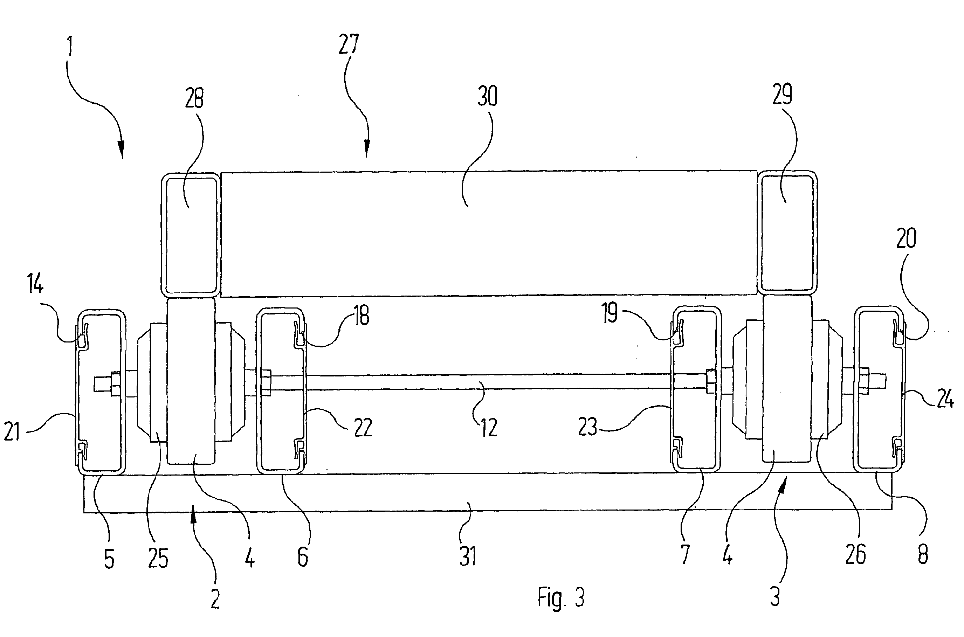

Die oben beschriebenen Verhältnisse sind genauer in den Figuren 2 und 3 dargestellt, wobei die Figur 2 einen vertikalen Schnitt senkrecht zur Transportrichtung des Rollenbahnförderers 1 im Bereich des in Figur 1 zu unterst dargestellten Rollenpaares und die Figur 3 einen entsprechenden Schnitt im Bereich des in Figur 1 zweitobersten Rollenpaares ist.

Zunächst wird auf Figur 2 Bezug genommen. In dieser sind in größerem Maßstab als in Figur 1 wiederzuerkennen die Rollenleisten 2 und 3 mit den diesen jeweils zugeordneten Seitenwangen 5, 6, 7, 8. Bei den Seitenwangen 5, 6, 7, 8 handelt es sich im wesentlichen um C-Profile, die auf ihrer in der Rollenleiste 2, 3 von den Rollen 4 abgewandten Seite einen Längsschlitz 17, 18, 19, 20 aufweisen.

Diese Längsschlitze 17, 18, 19, 20 lassen sich durch eingeklipste Kunststoffstreifen 21, 22, 23, 24 verschließen, wie dies in Figur 2 dargestellt ist. Auf diese Weise ergeben sich in den Seitenwangen 5, 6, 7, 8 Hohlräume, in denen elektrische Versorgungs- und Steuerleitungen verlegt werden können.

Die Figur 2 macht außerdem deutlich, wie in jeweils zwei Seitenwangen 5, 6, 7, 8 die verschiedenen, mit einem Nabenmotor 25, 26 versehenen Rollen 4 gelagert sind.

In Figur 2 ist neben dem Rollenbahnförderer 1 selbst ein insgesamt mit dem Bezugszeichen 27 versehener Skid dargestellt, wie er in der Automobiltechnik zum Transport von Karosserien und Karosserieteilen eingesetzt wird. Die Bauweise ist konventionell. Der Skid 27 besitzt in einem Abstand, welcher dem Abstand zwischen den Laufflächen der Rollen 4 der Rollenpaare des Rollenbahnförderers 1 entspricht, lineare, als Hohlprofil ausgestaltete Skidkufen 28, 29, die auf einer entsprechenden Anzahl von Rollen 4 der beiden Rollenleisten 2, 3 aufliegen. Die beiden Skidkufen 28, 29 sind durch Quertraversen 30 miteinander verbunden. Die Anordnung ist also so, daß durch Betätigen der Nabenmotoren 25, 26 der Rollen 4 in beiden Rollenleisten 2, 3 der Skid 27 durch die Wechselwirkung zwischen den Skidkufen 28 und den Mantelflächen der Rollen 4 linear in Richtung der Rollenleisten 2, 3 befördert wird.

Das in Figur 3 dargestellte Ausführungsbeispiel eines Rollenbahnförderers 1 unterscheidet sich nur in zweierlei Hinsicht von derjenigen Ausgestaltung, die oben anhand der Figur 2 erläutert wurde.

Beim Ausführungsbeispiel 2 war die Struktur, auf welcher die Seitenwangen 5, 6, 7, 8 der beiden Rollenleisten 2, 3 montiert ist, nicht dargestellt. Sie kann grundsätzlich beliebig sein. Beim Ausführungsbeispiel der Figur 3 dagegen sind die Seitenwangen 5, 6, 7, 8 auf Quertraversen 31 montiert, die ihrerseits von einem nicht dargestellten Stahlbau getragen werden.

Zudem sind die zu unterschiedlichen Rollenleisten 2, 3 gehörenden Rollen 4 eines Rollenpaares durch eine Welle 12 miteinander verbunden, wie dies oben anhand der Figur 1 schon für die beiden dort an der zweiten Position von oben dargestellten Rollen 4 beschrieben wurde.

Bei den oben beschriebenen Rollenbahnförderern 1 wurden als Antriebsmotoren für die Rollen 4 Nabenmotoren eingesetzt. Diese erweisen sich insbesondere aus Raumgründen als besonders günstig. Es ist jedoch grundsätzlich möglich, auch Motoren einzusetzen, die im Bereich der Seitenwangen 5, 6, 7, 8 oder auch im Bereich der Wellen 12 bzw. 13 (Figur 1) positioniert sind.

Nabenmotoren 25, 26 können in unterschiedlicher Ausgestaltung eingesetzt werden: Entweder treiben sie die Rollen 4 direkt an, so daß sich also die Abtriebswelle des Nabenmotors 25, 26 und die Rolle 4 mit der selben Drehzahl drehen, oder zwischen dem Nabenmotor 25, 26 und der eigentlichen Rolle 4 ist ein Getriebe zwischengeschaltet, so daß sich beispielsweise die eigentliche Rolle 4 mit geringerer Drehzahl als die Abtriebswelle des Nabenmotors 25, 26 dreht.

## Patentansprüche

1. Rollenbahnförderer (1) zum Transportieren von lasttragenden Skids (27) in der Automobilindustrie, mit
a) zwei parallel geführten Rollenleisten (2,3);
b) einer Mehrzahl.von angetriebenen Rollenpaaren, wobei die eine Rolle (4) des Rollenpaares drehbar an der einen Rollenleiste (2) und die andere Rolle (4) des Rollenpaares an der anderen Rollenleiste (3) jeweils beidseitig gegert ist;
c) einer Antriebseinrichtung (9,10,11,13,14,16), mit der mindestens eine Rolle (4) jeden angetriebenen Rollenpaares in Drehung versetzt werden kann,
**dadurch gekennzeichnet, daß**
d) die Antriebseinrichtung eine Vielzahl von einzelnen Antriebsmotoren (9, 10, 11, 13, 14, 16) umfaßt, von denen mindestens einer jeweils einem angetriebenen Rollenpaar zugeordnet ist, derart, daß die Zahl der einzelnen Antriebsmotoren (9, 10, 11, 13, 14) mindestens gleich der Zahl von angetriebenen Rollenpaaren ist, wobei
e) die Antriebsmotoren (9, 10, 11, 13, 14, 16) in die Rollen (4) integrierte Nabenmotoren (25, 26) sind.

2. Rollenbahnförderer nach Anspruch 1, **dadurch gekennzeichnet, daß** jeder Rolle (4) eines angetriebenen Rollenpaares ein eigener Antriebsmotor (9, 10, 13, 14) zugeordnet ist.

3. Rollenbahnförderer nach Anspruch 1, **dadurch gekennzeichnet, daß** jedem angetriebenen Rollenpaar genau ein eigener Antriebsmotor (11, 16) zugeordnet ist.

4. Rollenbahnförderer nach einem der vorhergehenden Ansprüche, **dadurch gekennzeichnet, daß** die zu einem angetriebenen Rollenpaar gehörenden Rollen (4) durch eine Welle (12, 15) drehfest miteinander verbunden sind.

## Claims

1. Roller conveyor (1) for transporting load-bearing skids (27) in the motor vehicle industry, comprising
a) two roller strips (2, 3) guided in parallel;
b) a plurality of driven roller pairs, the one roller (4) of the roller pair being rotatably mounted on the one roller strip (2) and the other roller (4) of the roller pair being mounted on the other roller strip (3), in each case on both sides;
c) a drive device (9, 10, 11, 13, 14, 16) by which at least one roller (4) of each driven roller pair is able to be set in rotation,
**characterised in that**
d) the drive device comprises a plurality of individual drive motors (9, 10, 11, 13, 14, 16) of which at least one is associated in each case with a driven roller pair, such that the number of individual drive motors (9, 10, 11, 13, 14) is at least the same as the number of driven roller pairs,
e) the drive motors (9, 10, 11, 13, 14, 16) being hub motors (25, 26) incorporated in the rollers (4).

2. Roller conveyor according to Claim 1, **characterised in that** an individual drive motor (9, 10, 13, 14) is associated with each roller (4) of a driven roller pair.

3. Roller conveyor according to Claim 1, **characterised in that** just one individual drive motor (11, 16) is associated with each driven roller pair.

4. Roller conveyor according to one of the preceding claims, **characterised in that** the rollers (4) belonging to a driven roller pair are connected to one another fixedly in terms of rotation by a shaft (12, 15).

## Revendications

1. Convoyeur à rouleaux (1) pour le transport de palettes à patins (27) portant des charges dans l'industrie automobile, avec
a) deux barres à rouleaux (2, 3) guidées en parallèle,
b) une pluralité de paires de rouleaux entraînées, sachant qu'un des rouleaux (4) de la paire de rouleaux est monté à rotation sur l'une (2) des barres à rouleaux et l'autre rouleau (4) de la paire de rouleaux sur l'autre barre à rouleaux (3), respectivement de part et d'autre ;
c) un dispositif d'entraînement (9, 10, 11, 13, 14, 16), avec lequel au moins un rouleau (4) de chaque paire de rouleaux entraînée peut être mis en rotation,
**caractérisé en ce que**
d) le dispositif d'entraînement comprend une multiplicité de moteurs d'entraînement individuels (9, 10, 11, 13, 14, 16), au moins un d'entre eux étant affecté à une paire de rouleaux entraînée respective, de telle sorte que le nombre de moteurs d'entraînement individuels (9, 10, 11, 13, 14) est au moins égal au nombre de paires de rouleaux entraînées,
e) sachant que les moteurs d'entraînement (9, 10, 11, 13, 14, 16) sont des moteurs montés sur moyeux (25, 26) intégrés dans les rouleaux (4).

2. Convoyeur à rouleaux selon la revendication 1, **caractérisé en ce qu'**un propre moteur d'entraînement (9, 10, 13, 14) est affecté à chaque rouleau (4) d'une paire de rouleaux entraînée.

3. Convoyeur à rouleaux selon la revendication 1, **caractérisé en ce qu'**exactement un propre moteur d'entraînement (11, 16) est affecté à chaque paire de rouleaux entraînée.

4. Convoyeur à rouleaux selon l'une des revendications précédentes, **caractérisé en ce que** les rouleaux (4) faisant partie d'une paire de rouleaux entraînée sont reliés entre eux en solidarité de rotation par un arbre (12, 15).
